# EUROPEAN PATENT SPECIFICATION

(11) **EP 4 336 366 B1**
(45) Date of publication and mention of the grant of the patent: **21.10.2026**
(21) Application number: 22819192.0
(22) Date of filing: 12.04.2022
(51) Int. Cl.: G06F 8/71, G06F 11/36, G06F 8/41

(54) **CODE PROCESSING METHOD AND SYSTEM, COMPUTER CLUSTER, MEDIUM AND PROGRAM PRODUCT**
CODEVERARBEITUNGSVERFAHREN UND -SYSTEM, COMPUTERCLUSTER, MEDIUM UND PROGRAMMPRODUKT
PROCÉDÉ ET SYSTÈME DE TRAITEMENT DE CODE, GRAPPE INFORMATIQUE, SUPPORT ET PRODUIT PROGRAMME

(30) Priority: 10.06.2021 CN 202110649871
(43) Date of publication of application: 13.03.2024
(73) Proprietor: Huawei Cloud Computing Technologies Co., Ltd., Gui'an New District, Guizhou 550025 (CN)
(72) Inventor: WEI, Zhao, Guiyang, Guizhou 550025 (CN); LIANG, Guangtai, Guiyang, Guizhou 550025 (CN); LIN, Qingshan, Guiyang, Guizhou 550025 (CN); LI, Chuncen, Guiyang, Guizhou 550025 (CN)
(74) Representative: Pfenning, Meinig & Partner mbB
(86) International application number: PCT/CN2022/086216
(87) International publication number: WO 2022/257588

(56) References cited:
- CN-A- 104 123 126
- CN-A- 106 126 410
- CN-A- 111 190 583
- CN-A- 111 651 352
- US-A1- 2019 339 964
- US-A1- 2020 257 597
- US-A1- 2021 089 297
- US-A1- 2022 334 812
- FL_CSDN1: "The Use of the Git Graphical Management Tool Sourcetree and the Problem of Git Conflicts", CSDN BLOG, CN, CN, pages 1 - 14, XP009542839, Retrieved from the Internet <URL:https://blog.csdn.net/FL_csdn1/article/details/113239591#3__96>

## Description

### TECHNICAL FIELD

This application relates to the field of software development technologies, and in particular, to a code processing method and a code processing system.

### BACKGROUND

Development of much software often relates to maintenance of a plurality of versions. For example, to adapt to a product of a model, a feature (feature) branch is usually created based on a master (master) branch or a develop (develop) branch of a software development project, and the feature branch is developed and maintained to adapt to the product of the model. The feature branch usually has a life cycle. After the product of the model is released, the feature branch may be destroyed. However, the feature branch may include a critical patch for fixing a bug or a generic feature. For this purpose, the critical patch or a critical feature in the feature branch may be further merged (or incorporated) into the master branch or the develop branch.

Considering that it is inefficient and error-prone to manually obtain a difference between a code of the feature branch and a code of the master branch or the develop branch through comparison and then manually copy the critical patch and the critical feature in the feature branch, a graphical pick (pick) tool is proposed in the industry. The pick tool may present at least one commit code of the feature branch to a user through a graphical interface, for example, a code generated by performing a commit operation on a local code repository (also referred to as a local repository, local repository), that is, a commit code. The user may pick a commit code in the graphical interface and merge the picked commit code into the master branch or the develop branch.

However, many errors are still generated when the commit code picked based on the graphical pick tool is merged with a commit code of the master branch or the develop branch, which cannot meet a service requirement.

US 2020/257597 A1 discloses that responsive to classifying a respective intermediary commit as an intersecting commit, a processor retains the respective intermediary commit in the candidate history list. Additionally, the processor joins the respective intermediary file list with the target file list and creates a finalized history list.

CN 111 190 583 A provides an associated conflict block presentation method and equipment.

US 2021/089297 A1 disclose an automated approach that prevents uncompleted work, such as software code still under development, from being automatically merged onto a target branch (or code master).

### SUMMARY

The present invention is set out in the appended set of claims. This application provides a code processing method. In the method, a first commit code and a second commit code associated with the first commit code are presented to a user based on an association relationship between different commit codes, and the user determines to further merge some or all of associated second commit codes into a target branch, to resolve a problem that a compilation error or a function error is caused because only the first commit code is picked, and meet a service requirement. This application further provides a code processing system, a computer cluster, a computer-readable storage medium, and a computer program product that correspond to the foregoing method.

According to a first aspect, this application provides a code processing method. The method is performed by a code processing system. The code processing system may be a software system having a code processing function. The software system may be deployed in a computer cluster, and the computer cluster runs the software system, to perform the code processing method in embodiments of this application. In some possible implementations, the code processing system may alternatively be a hardware system having a code processing function. When the hardware system runs, the code processing method in embodiments of this application is performed.

The code processing system first determines a source branch and a target branch of a software development project, where the source branch includes a plurality of commit codes, and the plurality of commit codes include a first commit code and a second commit code. Then, the code processing system presents the first commit code and the second commit code associated with the first commit code to a user. Then, the code processing system performs code merging on the first commit code, some or all of second commit codes, and a commit code in the target branch.

In the method, the code processing system presents, to the user based on an association relationship between different commit codes, the first commit code and the second commit code associated with the first commit code, and the user determines to further merge the some or all of the associated second commit codes into the target branch, to resolve a problem that a compilation error or a function error is caused because only the first commit code is picked, and meet a service requirement.

In some possible implementations, the code processing system may determine the first commit code picked by the user. For example, the first commit code picked by the user may be determined based on an identifier of the commit code carried in a commit code pick event triggered by the user, and then the second commit code associated with the first commit code is determined, to recommend the second commit code associated with the first commit code to the user for the user to pick. This avoids a compilation error or a function error caused because an associated commit code is not picked, improves pick quality and pick efficiency, and meets the service requirement.

In some possible implementations, the code processing system presents, to the user, a commit code picked from the second commit code. Correspondingly, the code processing system may perform code merging on the first commit code, the commit code picked from the second commit code, and the commit code in the target branch.

In the method, the second commit code associated with the first commit code picked by the user is recommended to the user, and the user determines, based on a requirement, whether to pick the second commit code. In one aspect, the compilation error or the function error caused because the associated commit code is not picked is avoided, and the pick quality and the pick efficiency are improved. In another aspect, the user picks the second commit code based on the requirement, to meet the user requirement.

In some possible implementations, the code processing system may further present an association relationship between the first commit code and the second commit code to the user. The association relationship includes at least one of a relationship between a definition and use of a variable and a relationship between a definition and calling of a function.

In the method, the code processing system presents the association relationship to the user, to provide help for the user to determine whether to pick the second commit code, and further provide help to improve the pick quality and the pick efficiency.

In some implementations, the code processing system may determine, in a recursive query manner, the second commit code associated with the first commit code. The code processing system analyzes a used variable and/or a called function in a changed code file corresponding to the first commit code, and then searches a record file based on the used variable and/or the called function in the changed code file corresponding to the first commit code. The record file records a variable and/or a function defined in a commit code committed before the first commit code and an association relationship between commit codes committed before the first commit code. Therefore, the code processing system obtains, by searching the record file,
the second commit code associated with the first commit code.

The code processing system may search the defined variable and/or the defined function in the record file for a variable and/or a function used for the first commit code, to obtain a commit code that has a direct dependency relationship with the first commit code. Then, the code processing system may search the association relationship that is between the commit codes committed before the first commit code and that is recorded in the record file for a commit code that has a direct dependency relationship, and determine a commit code on which the commit code that has the direct dependency relationship depends, to obtain a commit code that has an indirect dependency relationship with the first commit code. The code processing system may obtain the second commit code based on the commit code that has the direct dependency relationship with the first commit code and the commit code that has the indirect dependency relationship with the first commit code.

Compared with directly analyzing the first commit code and each commit code committed before the first commit code, searching, in a recursive search manner, for the second commit code associated with the first commit code can save computing power resources, significantly improve search efficiency, further improve a response speed and response efficiency, and improve user experience.

In some possible implementations, the code processing system may further skip a conflicting commit code when the user picks the conflicting commit code. Specifically, the user may configure a pick policy as a fast pick policy, which is also referred to as a fast-forward policy. In this way, when the user picks the conflicting commit code, the code processing system may skip the conflicting commit code according to the fast pick policy, and give up picking the conflicting commit code. In this way, a pick speed and pick efficiency can be improved.

In some possible implementations, the code processing system may further move a conflicting commit code to an end of a commit code sequence when the user picks the conflicting commit code, so that the user first picks a non-conflicting commit code. Specifically, the user may configure a pick policy as a non-conflict priority policy. In this way, the code processing system may move the conflicting commit code to the end of the commit code sequence when the user picks the conflicting commit code. The user may first centrally pick the non-conflicting commit code, and then centrally pick the conflicting commit code. This ensures smoothness of a pick process and improves user experience.

In some possible implementations, the code processing system may further prompt the user to skip a conflicting commit code or move the conflicting commit code to an end of a commit code sequence when the user picks the conflicting commit code. In this way, the user may choose, based on an actual requirement, to skip the conflicting commit code or move the conflicting commit code, thereby improving user experience.

In some possible implementations, the code processing system supports the user in configuring the pick policy. Specifically, the code processing system may receive the pick policy configured by the user, where the pick policy includes any one of the fast pick policy, the non-conflict priority policy, and a user priority policy. According to the foregoing pick policy, batch pick of the commit code can be implemented, and pick efficiency is improved.

In some possible implementations, the target branch includes a master branch or a develop branch. The code processing system may optimize the master branch or the develop branch by picking the commit code in the source branch to the master branch or the develop branch, for example, may repair a disadvantage of the master branch or the develop branch, and enhance performance of the master branch or the develop branch.

According to a second aspect, this application provides a code processing system. The system includes:
a determining unit, configured to determine a source branch and a target branch of a software development project, where the source branch includes a plurality of commit codes, and the plurality of commit codes include a first commit code and a second commit code;
a display unit, configured to present the first commit code and the second commit code associated with the first commit code to a user; and
a merging unit, configured to perform code merging on the first commit code, some or all of second commit codes, and a commit code in the target branch.

In some possible implementations, the determining unit is specifically configured to:
determine the first commit code picked by the user; and
determine the second commit code associated with the first commit code.

In some possible implementations, the display unit is further configured to:
present, to the user, a commit code picked from the second commit code; and
the merging unit is specifically configured to:
   perform code merging on the first commit code, the commit code picked from the second commit code, and the commit code in the target branch.

In some possible implementations, the display unit is further configured to:
present an association relationship between the first commit code and the second commit code to the user, where the association relationship includes at least one of a relationship between a definition and use of a variable and a relationship between a definition and calling of a function.

The determining unit is configured to:
analyze a used variable and/or a called function in a changed code file corresponding to the first commit code; and
search a record file based on the used variable and/or the called function in the changed code file corresponding to the first commit code, to obtain the second commit code associated with the first commit code, where the record file records a variable and/or a function defined in a commit code committed before the first commit code and an association relationship between commit codes committed before the first commit code.

In some possible implementations, the display unit is configured to:
skip a conflicting commit code when the user picks the conflicting commit code.

In some possible implementations, the display unit is configured to:
move a conflicting commit code to an end of a commit code sequence when the user picks the conflicting commit code, so that the user first picks a non-conflicting commit code.

In some possible implementations, the display unit is configured to:
prompt the user to skip a conflicting commit code or move the conflicting commit code to an end of a commit code sequence when the user picks the conflicting commit code.

In some possible implementations, the system further includes:
a communication unit, configured to receive a pick policy configured by the user, where the pick policy includes any one of a fast pick policy, a non-conflict priority policy, and a user priority policy.

In some possible implementations, the target branch includes a master branch or a develop branch.

In this application, based on the implementations according to the foregoing aspects, the implementations may be further combined to provide more implementations.

### BRIEF DESCRIPTION OF DRAWINGS

To describe the technical methods in embodiments of this application more clearly, the following briefly describes the accompanying drawings that need to be used in embodiments.
FIG. 1 is a diagram of a system architecture of a code processing system according to an embodiment of this application;
FIG. 2 is a schematic diagram of a code processing interface according to an embodiment of this application;
FIG. 3 is a logical diagram of a code change file according to an embodiment of this application;
FIG. 4 is a schematic diagram of a code processing interface according to an embodiment of this application;
FIG. 5 is a schematic diagram of an association relationship interface according to an embodiment of this application;
FIG. 6 is a schematic diagram of a code processing interface according to an embodiment of this application;
FIG. 7A is a diagram of a system architecture of a code processing system according to an embodiment of this application;
FIG. 7B is a diagram of a system architecture of a code processing system according to an embodiment of this application;
FIG. 8 is a flowchart of a code processing method according to an embodiment of this application; and
FIG. 9 is a schematic diagram of a structure of a computer cluster according to an embodiment of this application.

### DESCRIPTION OF EMBODIMENTS

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features.

Some technical terms used in embodiments of this application are first described.

A version control system (version control system, VCS) is specifically a tool for controlling a version of software developed by a developer, and the tool may be a computer program. The version control system may help developers work together and archive a complete history record of the software produced in a developer work process.

A branch (branch) is specifically a function proposed for the version control system to support addition or version control of several functions that are performed at the same time. The branch may be used to store different change records of software in a software development project in blocks, so that different branches do not affect each other. Branches may specifically include a master branch and a develop branch. For one software development project, there is usually only one master branch in a code repository of the project. All official versions provided to users for use are usually released on the master branch. Daily development of software is usually completed on the develop branch.

The branches may further include a temporary branch. The temporary branch may include a function branch (also referred to as a feature branch). The feature branch is usually a branch that is separated from the develop branch for a specific function. The feature branch usually has a life cycle. After a product corresponding to the feature branch is released, the feature branch may be destroyed. However, the feature branch may include a critical patch for fixing a bug or a generic feature. For this purpose, the critical patch or a critical feature in the feature branch may be further merged into the master branch or the develop branch.

A graphical pick tool is proposed in the industry to assist the developer in merging (or incorporating) the critical patch or the critical feature in the feature branch into the master branch or the develop branch. The pick tool may present at least one commit code (for example, a commit code) of the feature branch to the user through a graphical interface. The user may pick a commit code in the graphical interface and merge the picked commit code into the master branch. However, many errors are still generated when the commit code picked based on the graphical pick tool is merged with a commit code of the master branch or the develop branch, which cannot meet a service requirement.

In view of this, embodiments of this application provide a code processing method. The code processing method is performed by a code processing system. The code processing system may be a software system having a code processing function. The software system may be deployed in a computer cluster, and the computer cluster runs the software system, to perform the code processing method in embodiments of this application. In some possible implementations, the code processing system may alternatively be a hardware system having a code processing function. When the hardware system runs, the code processing method in embodiments of this application is performed. For ease of description, the following uses an example in which the code processing system is the software system for description.

The code processing system determines a source branch and a target branch of a software development project. The source branch includes a plurality of commit codes. The commit code may be a commit code generated by performing a commit operation on a local repository, for example, a commit code; or may be a commit code generated by performing a commit operation on a remote repository, for example, a commit code generated by performing a commit operation on a cloud development platform by a user. The plurality of commit codes include a first commit code and a second commit code. The code processing system presents the first commit code and the second commit code associated with the first commit code to the user, for example, the second commit code on which the first commit code depends. Then, the code processing system performs code merging on the first commit code, some or all of second commit codes, and a commit code in the target branch.

In the method, the code processing system presents, to the user based on an association relationship between different commit codes, the first commit code and the second commit code associated with the first commit code, and the user determines to further merge the some or all of the associated second commit codes into the target branch, to resolve a problem that a compilation error or a function error is caused because only the first commit code is picked, and meet a service requirement.

To make the technical solutions of this application clearer and easier to understand, the following describes in detail a system architecture of a code processing system provided in embodiments of this application with reference to the accompanying drawings.

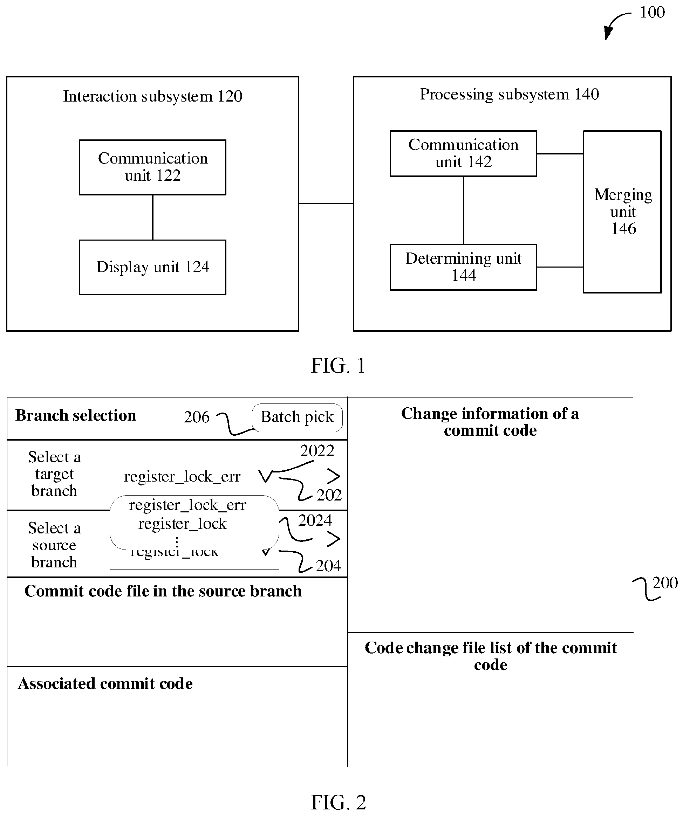

Refer to a diagram of a system architecture of a code processing system shown in FIG. 1. The code processing system 100 includes an interaction subsystem 120 and a processing subsystem 140. The interaction subsystem 120 includes a communication unit 122 and a display unit 124. The processing subsystem 140 includes a communication unit 142, a determining unit 144, and a merging unit 146.

Specifically, the determining unit 144 in the processing subsystem 140 is configured to determine a source branch and a target branch of a software development project. The source branch includes a plurality of commit codes, and the plurality of commit codes include a first commit code and a second commit code. The display unit 124 in the interaction subsystem 120 is configured to present the first commit code and the second commit code associated with the first commit code to a user. The merging unit 146 in the processing subsystem 140 is configured to perform code merging on the first commit code, some or all of second commit codes, and a commit code in the target branch.

In some possible implementations, the communication unit 122 in the interaction subsystem 120 is configured to send, based on a branch selection operation of the user, an identifier of a branch selected by the user to the processing subsystem 140, so that the determining unit 144 in the processing subsystem 140 may determine the source branch and the target branch based on the identifier of the branch selected by the user. The communication unit 122 in the interaction subsystem 120 may send an identifier of the source branch selected by the user and an identifier of the target branch selected by the user, so that the determining unit 144 in the processing subsystem 140 may separately determine the source branch and the target branch based on the identifiers.

Refer to a schematic diagram of a code processing interface shown in FIG. 2. The display unit 124 in the interaction subsystem 120 may present a code processing interface 200 to the user, where the code processing interface 200 carries a target branch selection control 202 and a source branch selection control 204, and the target branch selection control 202 and the source branch selection control 204 support selecting a branch by using a drop-down box. A process of selecting the target branch is used as an example for description. The user taps a drop-down sub-control 2022 on a right side of the target branch selection control 202. The interaction subsystem 120 obtains a plurality of branches of the software development project in response to this operation, and presents the plurality of branches of the software development project to the user by using a drop-down box 2024 of the target branch selection control 202. The user may select one branch (for example, a master branch or a develop branch) from the plurality of branches as the target branch.

Similarly, the user may select one branch from the plurality of branches of the software development project as the source branch by using the source branch selection control 204. For example, the user may select one function branch as the source branch. The communication unit 122 in the interaction subsystem 120 is configured to send the identifier of the branch selected by the user to the processing subsystem 140. In this way, the communication unit 142 in the processing subsystem 140 receives the identifier, and may send the identifier to the determining unit 144. The determining unit 144 may determine the source branch and the target branch based on the identifier of the branch.

The code processing interface 200 further includes a view area for a commit code in the source branch, an associated commit code view area, a code change file list view area, and a change information view area. The view area for the commit code in the source branch displays a plurality of commit codes included in the source branch. The associated commit code view area displays a second commit code associated with a first commit code picked by the user.

The code change file list view area displays a code change file list of a commit code (for example, the first commit code), where the code change file list includes at least one code change file corresponding to the commit code. The software development project includes a plurality of code files. In a continuous development process, the user (for example, a developer) may perform a plurality of commit operations, and each commit operation may generate one commit code. The commit code describes a difference between a code file (also referred to as a code file of a base version (base version), for example, a code file committed last time) before a change and a code file after the change (also referred to as a code file of a current version (current version)). For example, the commit code may describe that a definition of a variable X is added to a code file A and calling of a function Y is deleted from a code file B. At least one difference belonging to a same code file may be used to form a code change file. For example, a difference of the code file A may be used to form a code change file A, and a difference of the code file B may be used to form a code change file B.

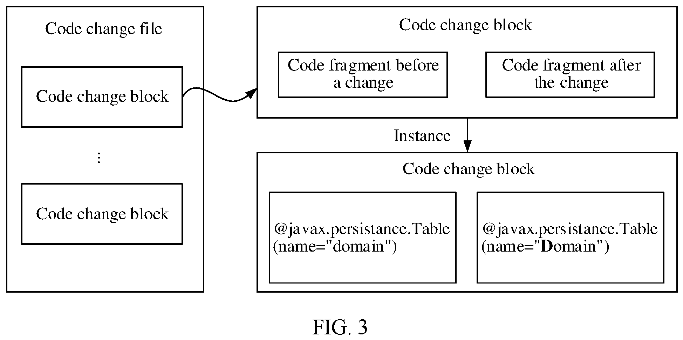

Refer to a schematic diagram of a code change file shown in FIG. 3. The code change file includes at least one code change block. Each code change block includes a code fragment before a change and a code fragment after the change, that is, a code fragment of the base version and a code fragment of the current version that correspond to the foregoing difference part. For ease of understanding, this application further provides an instance of the code change block. As shown in FIG. 3, the code fragment before the change is "domain", and the code fragment after the change is "Domain".

The change information view area displays details of a code change file, for example, a code change block included in the code change file, and a code fragment before a change and a code fragment after the change in the code change block. When the change information view area displays the code fragment before the change and the code fragment after the change, a location of the code fragment in the file to which the code fragment belongs may be further displayed, for example, a line number may be displayed, so that the user may view a context based on the line number.

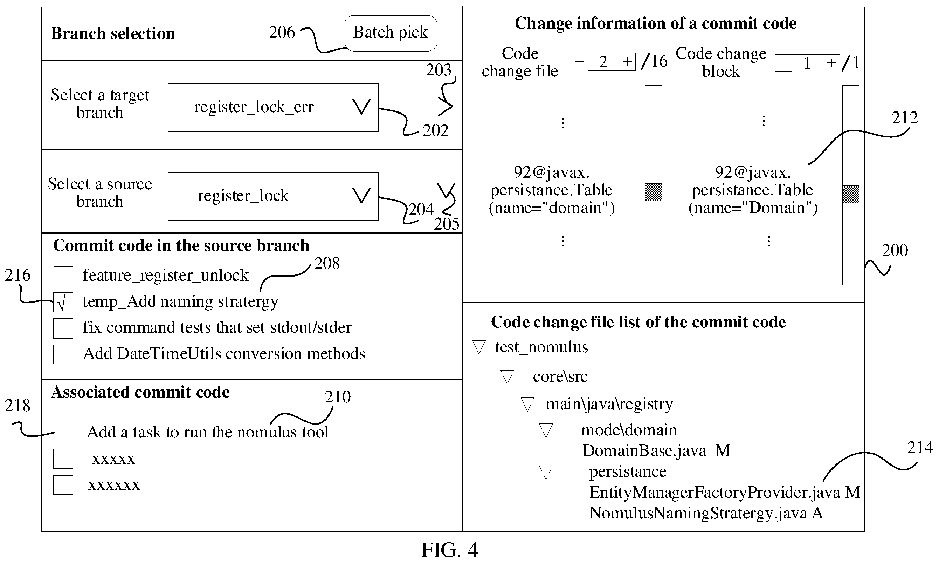

Further, after the user selects the source branch, the code processing interface 200 may display a plurality of commit codes included in the source branch. Refer to a schematic diagram of a code processing interface 200 shown in FIG. 4. A first list 208 is displayed in a view area for a commit code in a source branch in the code processing interface 200, and the first list 208 is a list of the plurality of commit codes included in the source branch. The display unit 124 in the interaction subsystem 120 may automatically trigger a folding and unfolding control 205 of the source branch, adjust the folding and unfolding control 205 from a folding state to an unfolding state, and display the first list 208. In some embodiments, the display unit 124 in the interaction subsystem 120 may alternatively adjust the folding and unfolding control 205 from the folding state to the unfolding after the folding and unfolding control 205 of the source branch is manually triggered by the user, and display the first list 208.

The code processing interface 200 may further display a code change file list of the commit codes included in the source branch. Refer to the schematic diagram of the code processing interface 200 shown in FIG. 4. A second list 214 is displayed in a code change file list view area in the code processing interface 200, and the second list 214 is a list of at least one code change file corresponding to the commit codes included in the source branch. For ease of viewing by the user, the code processing interface 200 may further display details of the code change file. As shown in FIG. 4, a change information view area in the code processing interface 200 displays a code change block 212. The code change block includes a code fragment before a change and a code fragment after the change. The change information view area further displays a quantity of code change files and a quantity of code change blocks in the code change file. The change information view area in the code processing interface 200 may display a specified code change block in a specified code change file. For example, the code processing interface 200 may display a 1^{st} code change block of a 2^{nd} code change file. In some possible implementations, the user may slide or drag a progress bar, and the display unit 124 in the interaction subsystem 120 may display, in the code processing interface 200 in response to the foregoing operation of the user, a code change block corresponding to the progress bar.

The second list 214 displayed in the code change file list view area and the code change block 212 displayed in the change information view area may assist the user in determining whether to pick a corresponding commit code. Specifically, the user may hover a mouse over one commit code in the first list 208. The communication unit 122 in the interaction subsystem 120 receives a mouse hover event, and sends a notification to the display unit 124. The display unit 124 may display the second list 214 corresponding to the commit code and the code change block 212 included in the code change file in the second list 214. In this way, the user may determine, based on the second list 214 and the code change block 212 included in the code change file in the second list 214, whether to pick the commit code. If the user may determine to pick the commit code, the user may trigger a corresponding pick control 216 to pick the commit code. The pick control 216 may be a check box, and the user may directly tap the check box to pick the commit code. It should be further noted that the user may alternatively pick the commit code in advance. If the user determines, based on the second list 214 and the code change block 212, not to pick the commit code, the user may cancel picking of the commit code. For example, the user may tap the check box again to cancel picking of the commit code.

When the user picks the first commit code from the plurality of commit codes included in the source branch, the communication unit 122 in the interaction subsystem 120 sends an identifier of the first commit code to the processing subsystem 140, for example, a hash value of the first commit code. The communication unit 142 in the processing subsystem 140 receives the identifier of the first commit code. The determining unit 144 determines the first commit code based on the identifier of the first commit code.

The determining unit 144 in the processing subsystem 140 may further determine the second commit code associated with the first commit code. The communication unit 142 may send the second commit code or an identifier of the second commit code to the interaction subsystem 120. Correspondingly, the display unit 124 in the interaction subsystem 120 may display a third list 210, where the third list 210 is a list of the second commit code associated with the first commit code picked by the user. Similarly, the second commit code in the third list 210 includes a pick control 218, and the user may pick the second commit code by using the pick control 218 of the second commit code.

During specific implementation, the user may hover the mouse over the second commit code in the third list 210. The communication unit 122 in the interaction subsystem 120 receives a mouse hover event, and sends a notification to the display unit 124. The display unit 124 may display the second list 214 of the second commit code and the code change block 212 included in the code change file in the second list 214. In this way, the user may determine, based on the second list 214 and the code change block 212 included in the code change file in the second list 214, whether to pick the second commit code. If the user may determine to pick the second commit code, the user may trigger the corresponding pick control 218 to pick the second commit code. The pick control 218 may be a check box, and the user may directly tap the check box to pick the second commit code. It should be further noted that the user may alternatively pick the second commit code in advance. If the user determines, based on the second list 214 and the code change block 212, not to pick the second commit code, the user may cancel picking of the second commit code. For example, the user may tap the check box again to cancel picking of the second commit code.

When displaying the second list 214 corresponding to the second commit code, the display unit 124 may further display details of the second commit code, for example, display one or more of a hash value, an author, a creation date, and description information of the second commit code. The description information describes a difference between a code file after a change and a code file before the change that correspond to the second commit code.

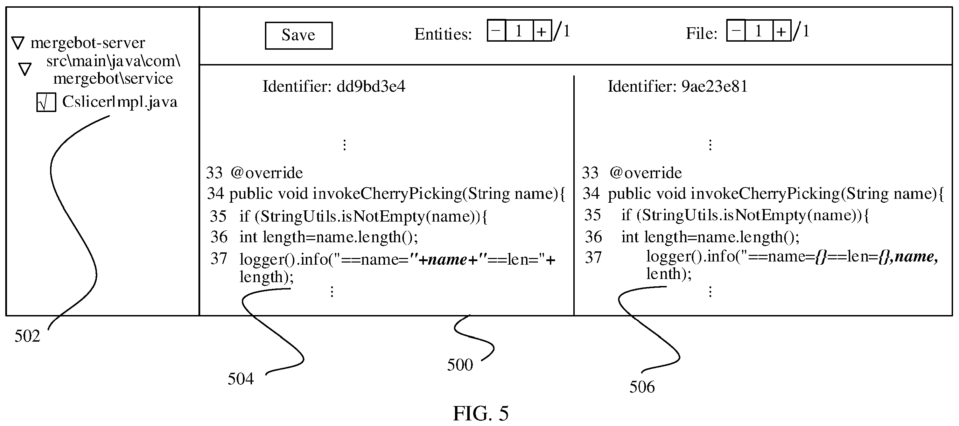

In some possible implementations, the user may further tap the second commit code, and the display unit 124 may display an association relationship between the second commit code and the first commit code that is picked by the user. Refer to a schematic diagram of an association relationship interface shown in FIG. 5. The communication unit 122 in the interaction subsystem 120 receives a mouse hover event, and sends a notification to the display unit 124. The display unit 124 may jump from the code processing interface 200 to the association relationship interface 500. The association relationship interface 500 displays the association relationship between the second commit code and the first commit code that is picked by the user. The association relationship may be at least one of a relationship between a definition and use of a variable and a relationship between a definition and calling of a function.

Specifically, the association relationship interface 500 displays an association directory 502. The association directory 502 is a path of a code file in which a variable or a function that is defined in the second commit code and that is used or called in the first commit code is located. The user may tap a code file in the directory 502, for example, tap Cslicerlmpl.java, and the display unit 124 in the interaction subsystem 120 may display, through the association relationship interface 500, a definition code fragment 504 and a use/calling code fragment 506, to display the association relationship between the first commit code and the second commit code. The function or the variable may be collectively referred to as an entity (entity). When the first commit code and the second commit code may have one or more associated entities, and there are a plurality of associated entities, the plurality of entities may be associated by using a same file (file) in a code file, or may be associated by using different files in code files. The user may view a corresponding code fragment by specifying an entity sequence number and a file sequence number. After viewing the code fragment and confirming that an association relationship is correct, the user may trigger a save control to save the association relationship.

The association relationship displayed in the association relationship interface 500 may help the user determine whether to pick the second commit code associated with the first commit code. When the user determines to pick the second commit code, the second commit code may be picked by using the pick control 218 of the second commit code in the code processing interface 200 shown in FIG. 4.

In some possible implementations, the code processing system 100 further supports the user in configuring a pick policy. The pick policy includes any one of a fast pick policy, a non-conflict priority (non-conflict priority) policy, and a user priority policy.

The fast pick policy may also be referred to as a fast-forward (fast-forward) policy, and means that if a conflicting commit code exists in a commit code picking process, for example, a commit code that conflicts with a picked commit code, or a commit code that conflicts with a commit code in the target branch, the conflicting commit code is automatically skipped, and picking of the conflicting commit code is given up. In this way, a pick speed and pick efficiency can be improved.

The non-conflict priority policy means that a non-conflicting commit code is preferentially picked. Specifically, if a conflicting commit code exists in a commit code picking process, the user moves the conflicting commit code to an end of a commit code sequence. After the non-conflicting commit code is picked, the conflicting commit code is picked.

The user priority policy may also be referred to as a nomal policy, and means that if a conflicting commit code exists in a commit code picking process, the user is prompted to skip the conflicting commit code or move the conflicting commit code to an end of a commit code sequence. For example, the code processing interface 200 may display a skip control and a move control above a corresponding pick control. When the user triggers the skip control, the conflicting commit code is skipped. When the user triggers the move control, the conflicting commit code is moved to the end of the commit code sequence.

The code processing interface 200 further carries a batch pick control 206. When the user completes picking of commit codes, the batch pick control 206 may be triggered. The communication unit 122 in the interaction subsystem 120 may send identifiers of the commit codes picked by the user to the processing subsystem 140. The commit codes picked by the user include the first commit code and some or all of second commit codes. Correspondingly, the merging unit 146 in the processing subsystem 140 is configured to perform code merging on the first commit code, the some or all of the second commit codes, and the commit code in the target branch. For example, the merging unit 146 may merge the first commit code and the some or all of the second commit codes into the target branch.

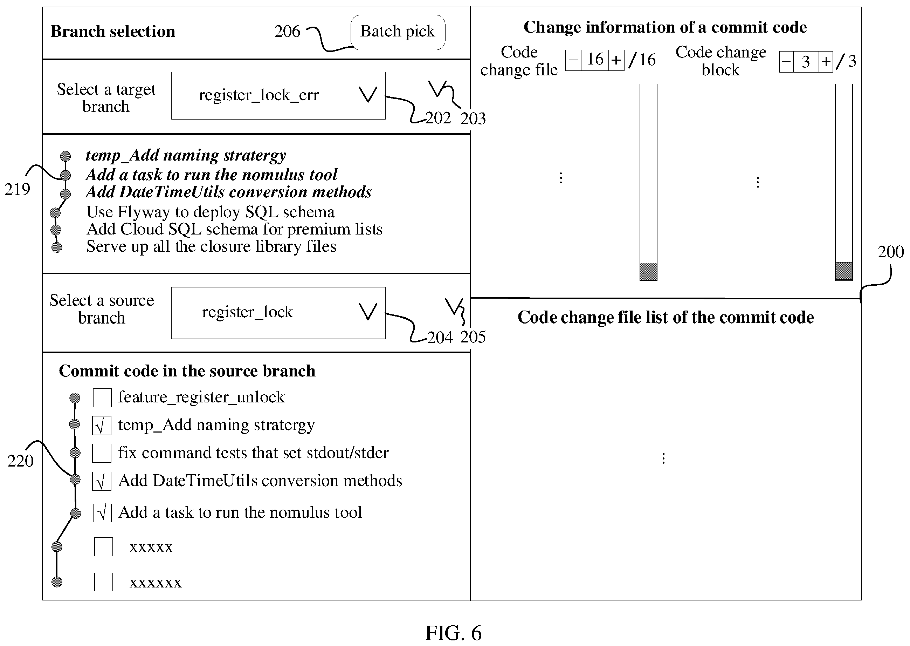

After merging the commit codes picked by the user into the target branch, the processing subsystem 140 may further return a result to the interaction subsystem 120. The display unit 124 in the interaction subsystem 120 may display the result. As shown in FIG. 6, a folding and unfolding control 203 of the target branch in the code processing interface 200 changes from a folding state to an unfolding state. Correspondingly, the code processing interface 200 further includes a result view area. The display unit 124 displays a commit code chain 219 of a merged target branch to the user by using the result view area in the code processing interface 200.

Each node in the commit code chain 219 represents one commit code of the target branch, and various nodes in the commit code chain 219 are sorted by commit time. Each node has a corresponding comment, and the comment may be a name of a commit code or the like. The commit codes picked by the user in the commit code chain 219 may be highlighted in a style different from that of an original commit code in the target branch, for example, in different colors or in a bold tilt style.

Further, the folding and unfolding control 205 of the source branch in the code processing interface 200 may also change to the unfolding state, and the display unit 124 in the interaction subsystem 120 may display a commit code chain 220 of the source branch to the user by using the view area for the commit code in the source branch in the code processing interface 200.

Each node in the commit code chain 220 represents one commit code of the source branch, and various nodes in the commit code chain 219 are sorted by commit time. Each node has a corresponding comment, and the comment may be a name of a commit code or the like. Each commit code corresponds to one check box, and a check box corresponding to a commit code that is selected by the user and merged into the target branch (that is, picked to the target branch) is in a selected state. In this way, the user may know the commit code that is picked from the source branch to the target branch.

It should be noted that the system architecture shown in FIG. 1 is merely an example of division of the code processing system 100. In another possible implementation of embodiments of this application, the code processing system 100 may alternatively be divided in another manner. For example, the code processing system 100 may not be divided into a plurality of subsystems, but may be directly divided into a plurality of functional units. For example, the code processing system 100 may include the determining unit 144, the display unit 124, and the merging unit 146.

The code processing system 100 supports recommending, to the user, the second commit code associated with the first commit code picked by the user, so that the user may pick complete commit codes at a time, to avoid a compilation error or a function error caused by picking only the first commit code and not picking the second commit code that has the association relationship such as a dependency relationship, ensure pick reliability, and meet a service requirement. In addition, the code processing system 100 further supports the user in setting the pick policy based on a requirement, for example, setting the fast pick policy, to improve pick efficiency.

The foregoing describes in detail the architecture of the code processing system 100. The following describes a deployment manner of the code processing system 100.

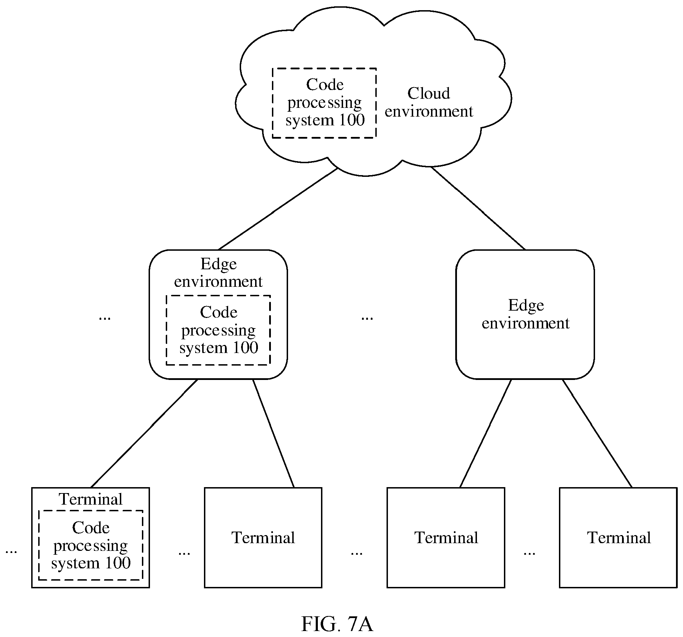

As shown in FIG. 7A, the code processing system 100 may be deployed in a cloud environment, specifically, one or more computing devices (for example, a central server) in the cloud environment. The code processing system 100 may alternatively be deployed in an edge environment, specifically, one or more computing devices (edge computing devices) in the edge environment. The edge computing device may be a server, a computing box, or the like. The cloud environment indicates a central computing device cluster that is owned by a cloud service provider and configured to provide computation, storage, and communication resources. The edge environment indicates an edge computing device cluster that is geographically close to a client device (that is, a client-side device) and configured to provide computation, storage, and communication resources.

In some possible implementations, the code processing system 100 may alternatively be deployed on a client device. The client device includes but is not limited to a user terminal such as a desktop computer, a notebook computer, or a smartphone. The code processing system 100 is run on these user terminals to implement code processing such as code picking and merging.

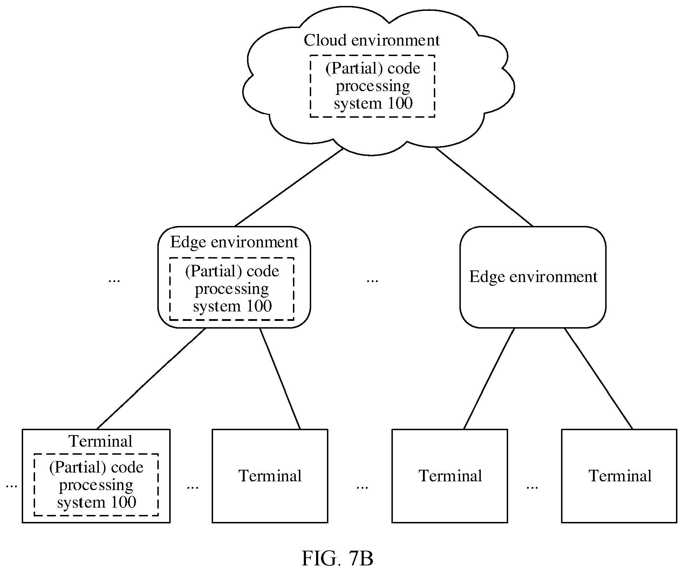

As shown in FIG. 7B, the code processing system 100 includes a plurality of parts, for example, includes a plurality of subsystems. Further, the subsystem may include a plurality of units. Based on this, various parts of the code processing system 100 may be further deployed in different environments in a distributed manner. For example, a part of the code processing system 100 may be separately deployed in three or any two of the cloud environment, the edge environment, and the client device.

To make the technical solutions of this application clearer and easier to understand, the following describes in detail a code processing method provided in embodiments of this application with reference to the accompanying drawings.

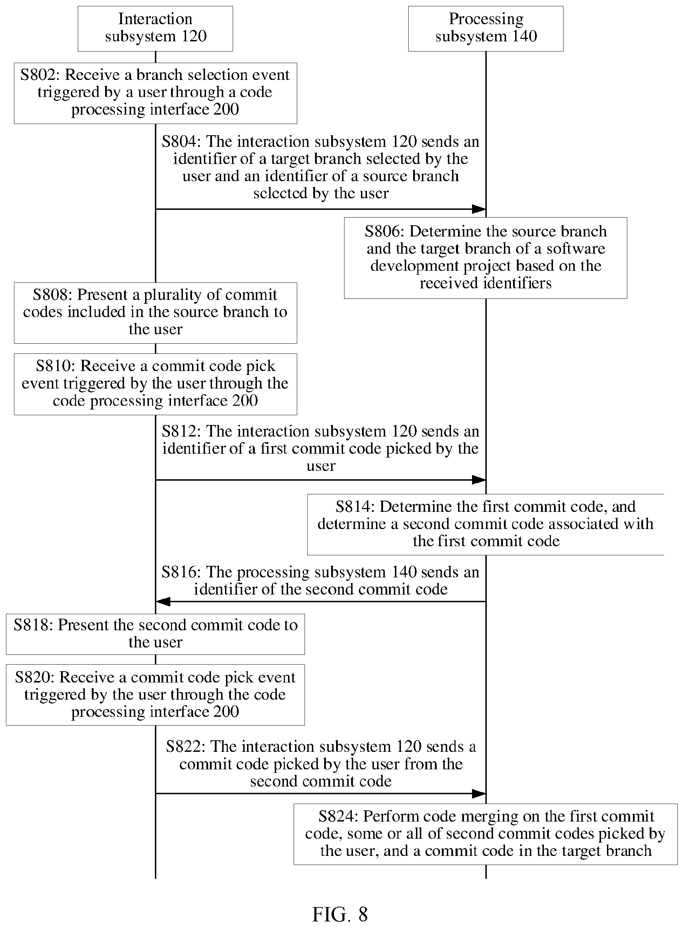

Refer to a flowchart of a code processing method shown in FIG. 8. The method includes the following steps.

S802: An interaction subsystem 120 receives a branch selection event triggered by a user through a code processing interface 200.

Specifically, the interaction subsystem 120 presents the code processing interface 200 to the user, where the code processing interface 200 carries a target branch selection control 202 and a source branch selection control 204, and the user may trigger the branch selection event by using the target branch selection control 202 and the source branch selection control 204. The branch selection event may include a target branch selection event and a source branch selection event. The interaction subsystem 120 may receive the branch selection event.

The target branch selection event carries an identifier of a target branch selected by the user, and the source branch selection event carries an identifier of a branch selected by the user. An identifier of a branch uniquely represents the branch. In some embodiments, the identifier of the branch may be a name of the branch.

S804: The interaction subsystem 120 sends the identifier of the target branch selected by the user and the identifier of the source branch to a processing subsystem 140.

S806: The processing subsystem 140 determines the source branch and the target branch of a software development project based on the received identifiers.

Specifically, the processing subsystem 140 may search branches of the software development project for branches that match the received identifiers, to determine the source branch and the target branch of the software development project.

S802 to S806 are a specific implementation in which a code processing system 100 determines the source branch and the target branch of the software development project. In another possible implementation of this embodiment of this application, the code processing system 100 may alternatively determine the source branch and the target branch of the software development project in another manner. For example, the code processing system 100 may automatically obtain a master branch or a develop branch of the software development project as the target branch, and obtain a function branch (for example, a to-be-destroyed function branch) as the source branch.

S808: The interaction subsystem 120 presents a plurality of commit codes included in the source branch to the user.

Specifically, the interaction subsystem 120 may present, in a list manner, the plurality of commit codes included in the source branch to the user. In some embodiments, with reference to the schematic diagram of the code processing interface 200 shown in FIG. 4, the interaction subsystem 120 displays the first list 208 by using the view area for the commit code in the source branch in the code processing interface 200. The first list 208 is a list of the plurality of commit codes in the source branch.

In some possible implementations, when presenting the commit codes included in the source branch to the user, the interaction subsystem 120 may present, by using the first list 208, identifiers of the commit codes included in the source branch, and may also present a code change file list of the commit codes included in the source branch to the user. In some embodiments, with reference to the schematic diagram of the code processing interface 200 shown in FIG. 4, the interaction subsystem 120 displays the second list 214 by using the code change file list view area in the code processing interface 200, where the second list 214 is a list of at least one code change file corresponding to the commit codes in the source branch. Each code change file includes at least one code change block. For structures of the code change file and the code change block, refer to related content descriptions in FIG. 3.

Further, the interaction subsystem 120 may further present details of the code change file to the user. As shown in FIG. 4, the interaction subsystem 120 may display, by using the change information view area in the code processing interface 200, the code change block 212 included in the code change file. The code change block includes a code fragment before a change and a code fragment after the change.

The interaction subsystem 120 may assist, by displaying the second list 214 and the code change block 212 included in the code change file in the second list, the user in determining whether to pick a corresponding commit code.

S810: The interaction subsystem 120 receives a commit code pick event triggered by the user through the code processing interface 200.

Specifically, the user may determine, based on the second list 214 and the code change block 212 included in the code change file in the second list 214, whether to pick the commit code. If the user may determine to pick the commit code, the user may trigger the corresponding pick control 216, to trigger the commit code pick event. If the user may determine not to pick the commit code, the user may not trigger the corresponding pick control 216. When the user triggers the pick control 216, the interaction subsystem 120 may receive the commit code pick event generated by the pick control 216 triggered by the user.

The commit code pick event indicates that the user picks, from the plurality of commit codes included in the source branch, a commit code corresponding to an identifier carried in the event. For ease of distinguishing from another commit code, in this embodiment of this application, the commit code picked by the user from the plurality of commit codes included in the source branch is referred to as a first commit code.

S812: The interaction subsystem 120 sends an identifier of the first commit code picked by the user to the processing subsystem 140.

The processing subsystem 140 may pre-store the plurality of commit codes included in the source branch, so that the interaction subsystem 120 may send the identifier of the first commit code picked by the user to the processing subsystem 140. The interaction subsystem 120 may obtain, from the commit code pick event, the identifier of the first commit code picked by the user, and then send the identifier to the processing subsystem 140. In this way, the processing subsystem 140 may obtain the first commit code based on the identifier of the first commit code.

It should be noted that, in some embodiments, the processing subsystem 140 may alternatively obtain, from the commit code pick event, the identifier of the first commit code picked by the user, and then directly send the first commit code to the processing subsystem 140 based on the identifier.

S814: The processing subsystem 140 determines the first commit code, and determines a second commit code associated with the first commit code.

Specifically, the processing subsystem 140 may determine the first commit code based on the identifier of the first commit code, and then may determine, in a recursive search manner, the second commit code associated with the first commit code. A process in which the processing subsystem 140 recursively searches for the second commit code is as follows: The processing subsystem 140 analyzes a used variable and/or a called function in the first commit code, and then searches a record file based on the used variable and/or the called function in the first commit code, to obtain the second commit code associated with the first commit code.

The processing subsystem 140 may obtain a code change file of the first commit code based on the first commit code. Then, the processing subsystem 140 processes the code change file through code understanding, to obtain an abstract syntax tree (abstract syntax tree, AST) corresponding to the code change file. The processing subsystem 140 further obtains a code change block based on the code change file. For example, the processing subsystem 140 may obtain the code change block of the code change file, that is, DiffHunk, by using a git diff instruction. Then, the processing subsystem 140 may obtain an AST sub-tree of each code change block based on a line number of the code change block and the AST of the code change file, and extract function calling and variable reference (use) from the AST sub-tree, to obtain the used variable and/or the called function in the first commit code.

Further, the processing subsystem 140 may further store the used variable and/or the called function in the first commit code, for example, may store the used variable and/or the called function in the first commit code in a map (map). The map is used to store a mapping relationship between the first commit code and the used variable or the called function in the first commit code. Therefore, the map may also be referred to as UseMap. A primary key of UseMap may be a full name QualifiedName of a function or a variable, and a value may be a commit code to which the function or the variable belongs. Further, the value may further include any one or more of a class (class) or name space (namespace) to which the function or the variable belongs, a file (a code file corresponding to the commit code), or a line number.

The record file records a variable and/or a function defined in a commit code committed before the first commit code and an association relationship between commit codes committed before the first commit code.

The variable and/or the function defined in the commit code committed before the first commit code in the record file may be obtained by the processing subsystem 140 by traversing a code repository in advance and then analyzing the commit code committed before the first commit code in the code repository. For an analysis process of the commit code committed before the first commit code, refer to the analysis process of the first commit code. Details are not described herein again.

The association relationship between the commit codes committed before the first commit code in the record file may be obtained by the processing subsystem 140 by traversing the code repository in advance and extracting function calling, variable use, a function definition, and a variable definition for the commit codes committed before the first commit code in the code repository.

Specifically, the processing subsystem 140 may traverse the code repository, to obtain the code change file for the commit code committed before the first commit code in the code repository. The processing subsystem 140 then performs code understanding on the code change file, obtains the AST of the code change file, and obtains the code change block from the code change file by using the git diff. The processing subsystem 140 then extracts the AST sub-tree of the code change block from the AST based on the line number of the code change block. The processing subsystem 140 extracts the function calling and the variable use from the AST sub-tree, and stores the function calling and the variable use in UseMap; and extracts the function definition and the variable definition from the AST sub-tree, and stores the function definition and the variable definition in DefMap.

DefMap is used to store a mapping relationship between a commit code and a variable or a function defined in the commit code. A primary key of DefMap may be a full name of a function or a variable, and a value describes a commit code to which the defined variable and/or function belong/belongs. Further, the value may further include any one or more of line numbers/a line number of the defined variable and/or function, or classes/a class or name space to which the defined variable and/or function belong/belongs.

The processing subsystem 140 may search DefMap based on the primary key QualifiedName in UseMap. If the search succeeds, it indicates that function calling or variable use matches a corresponding definition. The processing subsystem 140 may use a commit code including the definition as an associated commit code. In this way, the association relationship may be established between the commit codes committed before the first commit code.

It should be noted that a format of the record file may be set based on a service requirement. In some embodiments, the record file may be set to a JavaScript object notation (JavaScript object notation, JSON) format. In some other embodiments, the record file may alternatively be set to another format, for example, a hypertext markup language (hypertext markup language, HTML) format.

For ease of understanding, the following provides descriptions with reference to an example. In this example, it is assumed that the commit codes committed before the first commit code include a commit 1, a commit 2, ..., and a commit 10, where the commit 1 to the commit are sorted in chronological order. A record file records variables and/or functions defined by the commit 1, the commit 2, ..., and the commit 10, and the record file further records an association relationship between the commit 1, the commit 2, ..., and the commit 10. The association relationship may be that one commit depends on another commit. For example, a commit that uses a variable depends on a commit that defines the variable, and a commit that calls a function depends on a commit that defines the function.

Based on this, the processing subsystem 140 may search the record file for the variable and/or the function defined in the commit code committed before the first commit code. When a variable and/or a function defined in a commit code matches the variable and/or the function used in the first commit code, and the variable and/or the function are/is not defined in the first commit code, it may be determined that the commit code is a commit code on which the first commit code depends, and is a commit code having a direct dependency relationship.

Further, the processing subsystem 140 may search the record file based on the commit code having the direct dependency relationship, and obtain a commit code on which the commit code having the direct dependency relationship depends, to obtain the commit code having an indirect dependency relationship. In this embodiment of this application, a file having a direct dependency relationship and a file having an indirect dependency relationship may be collectively referred to as the second commit code associated with the first commit code.

The foregoing example is still used for description. It is assumed that the first commit code is a commit 11, and an undefined variable v1 is used in the commit 11. The processing subsystem 140 determines, by searching the record file, that the variable v1 is defined in the commit 7. The processing subsystem 140 may determine that the commit 7 is a commit code on which the commit 11 directly depends. Then, the processing subsystem 140 continues to search the record file, and determines that the commit 7 depends on the commit 4 and the commit 5. In this case, the processing subsystem 140 may determine that the commit 4 and the commit 5 are commit codes on which the commit 11 indirectly depends. In this way, the processing subsystem 140 may determine that second commit codes associated with the first commit code, that is, the commit 11, include the commit 4, the commit 5, and the commit 7.

The processing subsystem 140 searches, in a recursive search manner, for the second commit code associated with the first commit code, so that computing power resources can be saved, search efficiency can be significantly improved, a response speed and response efficiency are further improved, and user experience is improved.

In some possible implementations, not according to the invention, the processing subsystem 140 may directly analyze the first commit code to obtain UseMap corresponding to the first commit code, traverse the code repository, analyze the commit codes committed before the first commit code, to obtain DefMap of these commit codes, and then determine, based on UseMap and DefMap, the second commit code associated with the first commit code.

S816: The processing subsystem 140 sends an identifier of the second commit code to the interaction subsystem 120.

The identifier of the second commit code is used to distinguish the second commit code from another commit code, and the identifier is unique. In some embodiments, the identifier may be, for example, a hash value of the second commit code. In this way, the interaction subsystem 120 may locally obtain the second commit code based on the identifier, to reduce network transmission overheads.

In some possible implementations, the processing subsystem 140 may alternatively directly send the second commit code to the interaction subsystem 120. This is not limited in this embodiment of this application.

S818: The interaction subsystem 120 presents the second commit code to the user.

Specifically, the interaction subsystem 120 may present the second commit code to the user by using the associated commit code view area in the code processing interface 200. Refer to the schematic diagram of the code processing interface 200 shown in FIG. 4. The interaction subsystem 120 may present the third list 210 to the user through the code processing interface 200, where the third list 210 is a list of the second commit code associated with the first commit code.

Further, the user may hover a mouse over the second commit code in the third list 210, or tap the second commit code in the third list 210. Correspondingly, the interaction subsystem 120 may jump to the association relationship interface 500, and display, through the association relationship interface 500, an association relationship between the second commit code and the first commit code that is picked by the user, to provide help for the user to determine whether to pick the second commit code.

S808 to S818 are a specific implementation in which the code processing system 100 presents the first commit code and the second commit code associated with the first commit code to the user. In another possible implementation of this embodiment of this application, the code processing system 100 may alternatively implement, in another manner, the step of presenting the first commit code and the second commit code associated with the first commit code to the user.

S820: The interaction subsystem 120 receives a commit code pick event triggered by the user through the code processing interface 200.

Specifically, the user may determine, based on the association relationship that is between the first commit code and the second commit code and that is displayed in the association relationship interface 500, whether to pick the second commit code. If the user may determine to pick the second commit code, the user may trigger the corresponding pick control 218, to trigger the commit code pick event. If the user may determine not to pick the second commit code, the user may not trigger the corresponding pick control 218. Correspondingly, the interaction subsystem 120 may receive the commit code pick event generated by the pick control 218 triggered by the user.

In some possible implementations, the user may alternatively directly trigger the pick control 218 of the second commit code, to trigger the commit code pick event. In this way, the interaction subsystem 120 may receive the commit code pick event triggered by the user through the code processing interface 200. Then, the user may further hover the mouse over the second commit code, or directly tap the second commit code, so that the interaction subsystem 120 jumps to the association relationship interface 500, and displays, through the association relationship interface 500, the association relationship between the second commit code and the first commit code that is picked by the user. In this way, the user may check the picked second commit code based on the association relationship.

S822: The interaction subsystem 120 sends, to the processing subsystem 140, an identifier of a commit code picked by the user from the second commit code.

Similar to S816, the interaction subsystem 120 sends, to the processing subsystem 140, the identifier of the commit code picked by the user from the second commit code, for example, a hash value of the commit code picked by the user from the second commit code, so that the processing subsystem 140 may obtain, based on the identifier, the commit code picked by the user, to reduce network transmission overheads.

In some possible implementations, the interaction subsystem 120 may alternatively directly send, to the processing subsystem 140, the commit code picked by the user from the second commit code. The user may pick some of second commit codes, or may pick all of the second commit codes.

It should be noted that, after code picking is completed, the interaction subsystem 120 may further display, in the target branch, a commit code picked from the source branch. For example, the commit code picked by the user to the target branch may be displayed in a style different from that of an original commit code in the target branch. The user may put the mouse on the commit code picked by the user, to browse a code change file corresponding to the picked commit code to confirm pick correctness.

S824: The processing subsystem 140 performs merging on the first commit code, some or all of second commit codes, and a commit code in the target branch.

Specifically, the processing subsystem 140 may merge, into the target branch by using a merging instruction such as a merge instruction, the first commit code and some or all of second commit codes picked by the user from the second commit codes.

It should be noted that before merging, the processing subsystem 140 may further check the commit code. For example, the processing subsystem 140 may check whether the commit code has been picked to the target branch, and if the commit code has been picked to the target branch, may return a pick repetition prompt to the interaction subsystem 120, where the pick repetition prompt is used to notify the user that the commit code has been picked to the target branch. For another example, the processing subsystem 140 may further check whether the commit code is a merged code (for example, a code after merging), and if the commit code is the merged code, may return a pick invalidity prompt to the interaction subsystem 120, where the pick invalidity prompt is used to notify the user that the commit code is the merged code and does not need to be merged into the target branch.

S820 to S824 are a specific implementation in which the code processing system 100 performs code merging on the first commit code, the some or all of the second commit codes, and the commit code in the target branch. In another possible implementation of this embodiment of this application, the code processing system 100 may alternatively perform code merging in another implementation. For example, the code processing system 100 may automatically pick all second commit codes associated with the first commit code and the user does not need to manually pick the second commit code.

Based on the foregoing content descriptions, embodiments of this application provide a code processing method based on static analysis. In this method, an association relationship (for example, a dependency relationship) between commit codes is obtained from a perspective of code understanding, and a second commit code related to a first commit code picked by a user is recommended to the user, so that the user picks complete commit codes at a time, to avoid a compilation error or a function error caused because only the first commit code is picked but the second commit code on which the first commit code depends is missing, and improve pick quality and pick efficiency. A static analysis technology is used for the method, and the method can adapt to various languages such as Java/C/C++, and does not need to depend on compilation information and the like, to ensure reliability and efficiency of code picking.

In the embodiment shown in FIG. 8, the commit code picked by the user may conflict with a commit code that is picked earlier or an original commit code in the target branch. The conflict may affect a pick behavior of the user, and reduce pick efficiency. Therefore, embodiments of this application further provide different pick policies, so that the user performs configuration based on a requirement.

Specifically, the code processing system 100 (for example, the interaction subsystem 120 in the code processing system 100) receives a pick policy configured by the user, where the pick policy includes any one of a fast pick policy, a non-conflict priority policy, and a user priority policy. The code processing system 100 (for example, the processing subsystem 140 in the code processing system 100) may store the pick policy configured by the user. In this way, when the user picks the commit code, the processing subsystem 140 may perform code processing according to the pick policy.

In some possible implementations, the pick policy configured by the user is the fast pick policy. Specifically, the processing subsystem 140 may analyze the commit code picked by the user, and when determining that the commit code picked by the user is a conflicting commit code, that is, the user picks the conflicting commit code, may send a skip instruction to the interaction subsystem 120, where the skip instruction instructs to skip the conflicting commit code.

In some other possible implementations, the pick policy configured by the user is the non-conflict priority policy. Specifically, the processing subsystem 140 may analyze the commit code picked by the user, and when determining that the commit code picked by the user is a conflicting commit code, that is, the user picks the conflicting commit code, may send a move instruction to the interaction subsystem 120, where the move instruction instructs to move the conflicting commit code to an end of a commit code sequence, so that the user first picks a non-conflict commit code.

In some other possible implementations, the pick policy configured by the user is the user priority policy. Specifically, when determining that the user picks a conflicting commit code, the processing subsystem 140 may send a selection instruction to the interaction subsystem 120, where the selection instruction instructs to prompt the user to skip the conflicting commit code or move the conflicting commit code to an end of a commit code sequence, so that the user chooses to skip the conflicting commit code or move the conflicting commit code to the end of the commit code sequence.

Further, the user performs, according to the pick policy, batch pick on the commit codes included in the source branch. A batch pick process may be displayed in a manner of a progress bar through a user interface such as the code processing interface 200. Each node in the progress bar represents one picked commit code, and the node may represent different states by using different styles. For example, when a node is presented in a red blinking style, it indicates that a commit code corresponding to the node is a conflicting commit code. Non-conflict commit codes may be executed in a marquee style until all commit codes in the source branch are traversed.

The foregoing describes in detail the code processing method provided in embodiments of this application with reference to FIG. 1 to FIG. 8. The following describes a code processing system 100 provided in an embodiment of this application with reference to the accompanying drawings.

Refer to a schematic diagram of a structure of the code processing system 100 shown in FIG. 1. The system 100 includes:
a determining unit 144, configured to determine a source branch and a target branch of a software development project, where the source branch includes a plurality of commit codes, and the plurality of commit codes include a first commit code and a second commit code;
a display unit 124, configured to present the first commit code and the second commit code associated with the first commit code to a user; and
a merging unit 146, configured to perform code merging on the first commit code, some or all of second commit codes, and a commit code in the target branch.

The code processing system 100 may include a plurality of subsystems, for example, include an interaction subsystem 120 and a processing subsystem 140. The interaction subsystem 120 includes the display unit 124, and the processing subsystem 140 includes the determining unit 144 and the merging unit 146. It should be noted that the interaction subsystem 120 may further include a communication unit 122, and the processing subsystem 140 may further include a communication unit 142. The communication unit 122 is configured to communicate with the outside, for example, communicate with the processing subsystem 140. Similarly, the communication unit 142 is configured to communicate with the outside, for example, communicate with the interaction subsystem 120.

In some possible implementations, the determining unit 144 is specifically configured to:
determine the first commit code picked by the user; and
determine the second commit code associated with the first commit code.

In some possible implementations, the display unit 124 is further configured to:
present, to the user, a commit code picked from the second commit code; and

The merging unit 146 is specifically configured to:
perform code merging on the first commit code, the commit code picked from the second commit code, and the commit code in the target branch.

In some possible implementations, the display unit 124 is further configured to:
present an association relationship between the first commit code and the second commit code to the user, where the association relationship includes at least one of a relationship between a definition and use of a variable and a relationship between a definition and calling of a function.

In some possible implementations, the determining unit 144 is specifically configured to:
analyze a used variable and/or a called function in a changed code file corresponding to the first commit code; and
search a record file based on the used variable and/or the called function in the changed code file corresponding to the first commit code, to obtain the second commit code associated with the first commit code, where the record file records a variable and/or a function defined in a commit code committed before the first commit code and an association relationship between commit codes committed before the first commit code.

In some possible implementations, the display unit 124 is configured to:
skip a conflicting commit code when the user picks the conflicting commit code.

In some possible implementations, the display unit 124 is configured to:
move a conflicting commit code to an end of a commit code sequence when the user picks the conflicting commit code, so that the user first picks a non-conflicting commit code.

In some possible implementations, the display unit 124 is configured to:
prompt the user to skip a conflicting commit code or move the conflicting commit code to an end of a commit code sequence when the user picks the conflicting commit code.

In some possible implementations, the system 100 further includes:
the communication unit 122, configured to receive a pick policy configured by the user, where the pick policy includes any one of a fast pick policy, a non-conflict priority policy, and a user priority policy.

In some possible implementations, the target branch includes a master branch or a develop branch.

The code processing system 100 according to this embodiment of this application may correspondingly perform the method described in embodiments of this application, and the foregoing and other operations and/or functions of the units in the code processing system 100 are respectively used to implement corresponding procedures of the method in the embodiment shown in FIG. 8. For brevity, details are not described herein again.

An embodiment of this application further provides a computer cluster. The computer cluster includes at least one computer. The computer includes a local server in a self-owned data center and/or a cloud server in a cloud environment, and may also include a client-side device such as a notebook computer or a desktop computer. The computer cluster is specifically configured to implement a function of the code processing system 100 in the embodiment shown in FIG. 1.

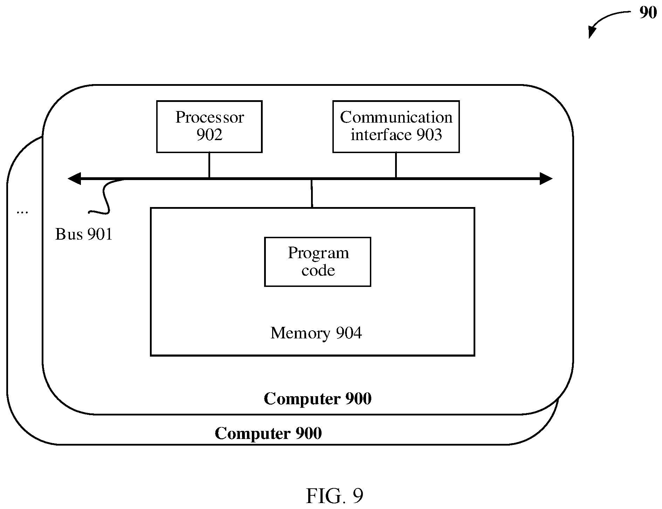

FIG. 9 is a schematic diagram of a structure of a computer cluster 90. As shown in FIG. 9, the computer cluster 90 includes a plurality of computers 900, and the computer 900 includes a bus 901, a processor 902, a communication interface 903, and a memory 904. The processor 902, the memory 904, and the communication interface 903 communicate with each other through the bus 901.

The bus 601 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 9, but this does not mean that there is only one bus or only one type of bus.

The processor 902 may be any one or more of processors such as a central processing unit (central processing unit, CPU), a graphics processing unit (graphics processing unit, GPU), a microprocessor (microprocessor, MP), or a digital signal processor (digital signal processor, DSP).

The communication interface 903 is configured to communicate with the outside. For example, the communication interface 903 may be configured to receive a pick policy configured by a user, and send an identifier of a source branch or a target branch picked by the user, or send an identifier of a commit code (for example, a first commit code or some or all of second commit codes) picked by the user.

The memory 904 may include a volatile memory (volatile memory), for example, a random access memory (random access memory, RAM). The memory 904 may further include a non-volatile memory (non-volatile memory), for example, a read-only memory (read-only memory, ROM), a flash memory, a hard disk drive (hard disk drive, HDD), or a solid state drive (solid state drive, SSD).

The memory 904 stores an executable code, and the processor 902 executes the executable code to perform the foregoing code processing method.

Specifically, when the embodiment shown in FIG. 1 is implemented, and the units of the data processing system 100 described in the embodiment of FIG. 1 are implemented by software, software or a program code required for performing functions of the units such as the determining unit 144 and the merging unit 146 in FIG. 1 is stored in the memory 904. The processor 902 executes the program code stored in the memory 904, to perform the code processing method in embodiments of this application.

It should be noted that FIG. 9 is described by using an example in which the computer cluster 90 includes the plurality of computers 900. Some computers 900 in the plurality of computers 900 may be configured to implement functions of the interaction subsystem 120, and some other computers 900 may be configured to implement functions of the processing subsystem 140. In another possible implementation of this embodiment of this application, the computer cluster 90 may alternatively include one computer 900, and the computer 900 is configured to implement functions of the code processing system 100.

An embodiment of this application further provides a computer-readable storage medium. The computer-readable storage medium includes instructions, and the instructions instruct a computer to perform the code processing method used for the code processing system 100.

It should be noted that the instructions in the computer-readable storage medium may be executed by a plurality of computers in a computer cluster. Therefore, each computer may also perform a part of the code processing method used for the code processing system 100. For example, some computers may perform steps performed by the interaction subsystem 120 in the foregoing code processing method, and some other computers may perform steps performed by the processing subsystem 140 in the foregoing code processing method.

An embodiment of this application further provides a computer program product. When the computer program product is executed by a computer, the computer performs any one of the foregoing code processing methods. The computer program product may be a software installation package. When any one of the foregoing code processing methods needs to be used, the computer program product may be downloaded, and the computer program product may be executed on the computer.

## Claims

1. A code processing method performed by a code processing system, wherein the method comprises:
determining (S806) a source branch and a target branch of a software development project, wherein the source branch comprises a plurality of commit codes, and the plurality of commit codes comprise a first commit code and a second commit code;
presenting (S818) the first commit code and the second commit code associated with the first commit code to a user;
wherein the second commit code associated with the first commit code is determined in the following manner: analyzing a used variable and/or a called function in a changed code file corresponding to the first commit code, and searching a record file based on the used variable and/or the called function in the changed code file corresponding to the first commit code, to obtain the second commit code associated with the first commit code, wherein the record file records a variable and/or a function defined in a commit code committed before the first commit code and an association relationship between commit codes committed before the first commit code;
and
performing (S824) code merging on the first commit code, some or all of second commit codes, and a commit code in the target branch.

2. The method according to claim 1, wherein before presenting (S818) the first commit code and the second commit code associated with the first commit code to a user, the method further comprises:
determining (S814) the first commit code picked (S810, S812) by the user; and
determining (S814) the second commit code associated with the first commit code.

3. The method according to claim 1 or 2, wherein after presenting (S818) the first commit code and the second commit code associated with the first commit code to a user, the method further comprises:
presenting, to the user, a commit code picked (S820, S822) by the user from the second commit code; and
the performing (S824) code merging on the first commit code, some or all of second commit codes, and a commit code in the target branch comprises:
performing code merging on the first commit code, the commit code picked from the second commit code, and the commit code in the target branch.

4. The method according to any one of claims 1 to 3, wherein the method further comprises:
presenting an association relationship between the first commit code and the second commit code to the user, wherein the association relationship comprises at least one of a relationship between a definition and use of a variable and a relationship between a definition and calling of a function.

5. The method according to any one of claims 1 to 4, wherein the method further comprises:
skipping a conflicting commit code when the user picks the conflicting commit code.

6. The method according to any one of claims 1 to 4, wherein the method further comprises:
moving a conflicting commit code to an end of a commit code sequence when the user picks the conflicting commit code, so that the user first picks a non-conflicting commit code.

7. The method according to any one of claims 1 to 4, wherein the method further comprises:
prompting the user to skip a conflicting commit code or move the conflicting commit code to an end of a commit code sequence when the user picks the conflicting commit code.

8. The method according to any one of claims 1 to 7, wherein the method further comprises:
receiving a pick policy configured by the user, wherein the pick policy comprises any one of a fast pick policy, a non-conflict priority policy, and a user priority policy.

9. The method according to any one of claims 1 to 8, wherein the target branch comprises a master branch or a develop branch.

10. A code processing system, wherein the system comprises:
a determining unit (144), configured to determine a source branch and a target branch of a software development project, wherein the source branch comprises a plurality of commit codes, and the plurality of commit codes comprise a first commit code and a second commit code;
wherein the determining unit is configured to:
analyze a used variable and/or a called function in a changed code file corresponding to the first commit code; and
search a record file based on the used variable and/or the called function in the changed code file corresponding to the first commit code, to obtain the second commit code associated with the first commit code, wherein the record file records a variable and/or a function defined in a commit code committed before the first commit code and an association relationship between commit codes committed before the first commit code;
a display unit (124), configured to present the first commit code and the second commit code associated with the first commit code to a user; and
a merging unit (146), configured to perform code merging on the first commit code, some or all of second commit codes, and a commit code in the target branch.

11. The system according to claim 10, wherein the determining unit is specifically configured to:
determine the first commit code picked by the user; and
determine the second commit code associated with the first commit code.

12. The system according to claim 10 or 11, wherein the display unit is further configured to:
present, to the user, a commit code picked by the user from the second commit code; and
the merging unit is specifically configured to:
perform code merging on the first commit code, the commit code picked from the second commit code, and the commit code in the target branch.

13. The system according to any one of claims 10 to 12, wherein the display unit is further configured to:
present an association relationship between the first commit code and the second commit code to the user, wherein the association relationship comprises at least one of a relationship between a definition and use of a variable and a relationship between a definition and calling of a function.

## Patentansprüche

1. Codeverarbeitungsverfahren, das durch ein Codeverarbeitungssystem durchgeführt wird, wobei das Verfahren umfasst:
Bestimmen (S806) eines Quellzweigs und eines Zielzweigs eines Softwareentwicklungsprojekts, wobei der Quellzweig eine Vielzahl von Festschreibungscodes umfasst und die Vielzahl von Festschreibungscodes einen ersten Festschreibungscode und einen zweiten Festschreibungscode umfassen;
Darstellen (S818) des ersten Festschreibungscodes und des zweiten Festschreibungscodes, der dem ersten Festschreibungscode zugeordnet ist, für einen Benutzer;
wobei der zweite Festschreibungscode, der dem ersten Festschreibungscode zugeordnet ist, auf die folgende Weise bestimmt wird: Analysieren einer verwendeten Variablen und/oder einer aufgerufenen Funktion in einer geänderten Codedatei, die dem ersten Festschreibungscode entspricht, und Durchsuchen einer Aufzeichnungsdatei basierend auf der verwendeten Variablen und/oder der aufgerufenen Funktion in der geänderten Codedatei, die dem ersten Festschreibungscode entspricht, um den zweiten Festschreibungscode, der dem ersten Festschreibungscode zugeordnet ist, zu erhalten, wobei die Aufzeichnungsdatei eine Variable und/oder eine Funktion, die in einem Festschreibungscode definiert ist, der vor dem ersten Festschreibungscode festgeschrieben wurde, und eine Zuordnungsbeziehung zwischen Festschreibungscodes, die vor dem ersten Festschreibungscode festgeschrieben wurden, aufzeichnet;
und
Durchführen (S824) einer Codezusammenführung an dem ersten Festschreibungscode, einigen oder allen zweiten Festschreibungscodes und einem Festschreibungscode in dem Zielzweig.

2. Verfahren nach Anspruch 1, wobei, vor dem Darstellen (S818) des ersten Festschreibungscodes und des zweiten Festschreibungscodes, der dem ersten Festschreibungscode zugeordnet ist, für einen Benutzer, das Verfahren ferner umfasst: Bestimmen (S814) des ersten Festschreibungscodes, der durch den Benutzer ausgewählt (S810, S812) wurde; und
Bestimmen (S814) des zweiten Festschreibungscodes, der dem ersten Festschreibungscode zugeordnet ist.

3. Verfahren nach Anspruch 1 oder 2, wobei, nach dem Darstellen (S818) des ersten Festschreibungscodes und des zweiten Festschreibungscodes, der dem ersten Festschreibungscode zugeordnet ist, für einen Benutzer, das Verfahren ferner umfasst:
Darstellen, für den Benutzer, eines Festschreibungscodes, der durch den Benutzer aus dem zweiten Festschreibungscode ausgewählt (S820, S822) wurde;
und
das Durchführen (S824) der Codezusammenführung an dem ersten Festschreibungscode, einigen oder allen zweiten Festschreibungscodes und einem Festschreibungscode in dem Zielzweig umfasst:
Durchführen der Codezusammenführung des ersten Festschreibungscodes, des Festschreibungscodes, der aus dem zweiten Festschreibungscode ausgewählt wurde, und des Festschreibungscodes in dem Zielzweig.

4. Verfahren nach einem der Ansprüche 1 bis 3, wobei das Verfahren ferner umfasst: Darstellen einer Zuordnungsbeziehung zwischen dem ersten Festschreibungscode und dem zweiten Festschreibungscode für den Benutzer, wobei die Zuordnungsbeziehung mindestens eine von einer Beziehung zwischen einer Definition und einer Verwendung einer Variablen und einer Beziehung zwischen einer Definition und einem Aufruf einer Funktion umfasst.

5. Verfahren nach einem der Ansprüche 1 bis 4, wobei das Verfahren ferner umfasst: Überspringen eines in Konflikt stehenden Festschreibungscodes, wenn der Benutzer den in Konflikt stehenden Festschreibungscode auswählt.

6. Verfahren nach einem der Ansprüche 1 bis 4, wobei das Verfahren ferner umfasst: Verschieben eines in Konflikt stehenden Festschreibungscodes an ein Ende einer Festschreibungscodesequenz, wenn der Benutzer den in Konflikt stehenden Festschreibungscode auswählt, sodass der Benutzer zuerst einen nicht in Konflikt stehenden Festschreibungscode auswählt.

7. Verfahren nach einem der Ansprüche 1 bis 4, wobei das Verfahren ferner umfasst: Auffordern des Benutzers, einen in Konflikt stehenden Festschreibungscode zu überspringen oder den in Konflikt stehenden Festschreibungscode an ein Ende einer Festschreibungscodesequenz zu verschieben, wenn der Benutzer den in Konflikt stehenden Festschreibungscode auswählt.

8. Verfahren nach einem der Ansprüche 1 bis 7, wobei das Verfahren ferner umfasst: Empfangen einer Auswahlrichtlinie, die durch den Benutzer konfiguriert ist, wobei die Auswahlrichtlinie eine beliebige von einer Schnellauswahlrichtlinie, einer konfliktfreien Prioritätsrichtlinie und einer Benutzerprioritätsrichtlinie umfasst.

9. Verfahren nach einem der Ansprüche 1 bis 8, wobei der Zielzweig einen Hauptzweig oder einen Entwicklungszweig umfasst.

10. Codeverarbeitungssystem, wobei das System umfasst:
eine Bestimmungseinheit (144), die konfiguriert ist, um einen Quellzweig und einen Zielzweig eines Softwareentwicklungsprojekts zu bestimmen, wobei der Quellzweig eine Vielzahl von Festschreibungscodes umfasst und die Vielzahl von Festschreibungscodes einen ersten Festschreibungscode und einen zweiten Festschreibungscode umfassen;
wobei die Bestimmungseinheit konfiguriert ist zum:
Analysieren einer verwendeten Variable und/oder einer aufgerufenen Funktion in einer geänderten Codedatei, die dem ersten Festschreibungscode entspricht; und Durchsuchen einer Aufzeichnungsdatei basierend auf der verwendeten Variablen und/oder der aufgerufenen Funktion in der geänderten Codedatei, die dem ersten Festschreibungscode entspricht, um den zweiten Festschreibungscode, der dem ersten Festschreibungscode zugeordnet ist, zu erhalten, wobei die Aufzeichnungsdatei eine Variable und/oder eine Funktion, die in einem Festschreibungscode definiert ist, der vor dem ersten Festschreibungscode festgeschrieben wurde, und eine Zuordnungsbeziehung zwischen Festschreibungscodes, die vor dem ersten Festschreibungscode festgeschrieben wurden, aufzeichnet;
eine Anzeigeeinheit (124), die konfiguriert ist, um den ersten Festschreibungscode und den zweiten Festschreibungscode, der dem ersten Festschreibungscode zugeordnet ist, für einen Benutzer darzustellen; und
eine Zusammenführungseinheit (146), die konfiguriert ist, um die Codezusammenführung an dem ersten Festschreibungscode, einigen oder allen zweiten Festschreibungscodes und einem Festschreibungscode in dem Zielzweig durchzuführen.

11. System nach Anspruch 10, wobei die Bestimmungseinheit speziell konfiguriert ist zum:
Bestimmen des ersten Festschreibungscodes, der durch den Benutzer ausgewählt wurde; und
Bestimmen des zweiten Festschreibungscodes, der dem ersten Festschreibungscode zugeordnet ist.

12. System nach Anspruch 10 oder 11, wobei die Anzeigeeinheit ferner konfiguriert ist zum:
Darstellen, für den Benutzer, eines Festschreibungscodes, der durch den Benutzer aus dem zweiten Festschreibungscode ausgewählt wurde; und
die Zusammenführungseinheit speziell konfiguriert ist zum:
Durchführen der Codezusammenführung an dem ersten Festschreibungscode, dem Festschreibungscode, der aus dem zweiten Festschreibungscode ausgewählt wurde, und dem Festschreibungscode in dem Zielzweig.

13. System nach einem der Ansprüche 10 bis 12, wobei die Anzeigeeinheit ferner konfiguriert ist zum:
Darstellen eine Zuordnungsbeziehung zwischen dem ersten Festschreibungscode und dem zweiten Festschreibungscode für den Benutzer, wobei die Zuordnungsbeziehung mindestens eine von einer Beziehung zwischen einer Definition und der Verwendung einer Variablen und einer Beziehung zwischen einer Definition und dem Aufruf einer Funktion umfasst.

## Revendications

1. Procédé de traitement de code réalisé par un système de traitement de code, dans lequel le procédé comprend :
la détermination (S806) d'une branche source et d'une branche cible d'un projet de développement logiciel, dans lequel la branche source comprend une pluralité de codes de validation, et la pluralité de codes de validation comprend un premier code de validation et un second code de validation ;
la présentation (S818) du premier code de validation et du second code de validation associé au premier code de validation à un utilisateur ;
dans lequel le second code de validation associé au premier code de validation est déterminé de la manière suivante : analyse d'une variable utilisée et/ou d'une fonction appelée dans un fichier de code modifié correspondant au premier code de validation, et recherche d'un fichier d'enregistrement sur la base de la variable utilisée et/ou de la fonction appelée dans le fichier de code modifié correspondant au premier code de validation, pour obtenir le second code de validation associé au premier code de validation, dans lequel le fichier d'enregistrement enregistre une variable et/ou une fonction définies dans un code de validation validé avant le premier code de validation et une relation d'association entre des codes de validation validés avant le premier code de validation ;
et
la réalisation (S824) d'une fusion de codes sur le premier code de validation, une partie ou la totalité des seconds codes de validation, et un code de validation dans la branche cible.

2. Procédé selon la revendication 1, dans lequel, avant la présentation (S818) du premier code de validation et du second code de validation associé au premier code de validation à un utilisateur, le procédé comprend en outre :
la détermination (S814) du premier code de validation sélectionné (S810, S812) par l'utilisateur ; et
la détermination (S814) du second code de validation associé au premier code de validation.

3. Procédé selon la revendication 1 ou 2, dans lequel, après la présentation (S818) du premier code de validation et du second code de validation associé au premier code de validation à un utilisateur, le procédé comprend en outre :
la présentation, à l'utilisateur, d'un code de validation sélectionné (S820, S822) par l'utilisateur à partir du second code de validation ;
et
la réalisation (S824) d'une fusion de codes sur le premier code de validation, une partie ou la totalité des seconds codes de validation, et un code de validation dans la branche cible comprend :
la réalisation d'une fusion de codes sur le premier code de validation, le code de validation sélectionné à partir du second code de validation, et le code de validation dans la branche cible.

4. Procédé selon l'une quelconque des revendications 1 à 3, dans lequel le procédé comprend en outre :
la présentation d'une relation d'association entre le premier code de validation et le second code de validation à l'utilisateur, dans lequel la relation d'association comprend au moins l'une parmi une relation entre une définition et une utilisation d'une variable et une relation entre une définition et un appel d'une fonction.

5. Procédé selon l'une quelconque des revendications 1 à 4, dans lequel le procédé comprend en outre :
l'omission d'un code de validation conflictuel lorsque l'utilisateur sélectionne le code de validation conflictuel.

6. Procédé selon l'une quelconque des revendications 1 à 4, dans lequel le procédé comprend en outre :
le déplacement d'un code de validation conflictuel à la fin d'une séquence de codes de validation lorsque l'utilisateur sélectionne le code de validation conflictuel, de sorte que l'utilisateur sélectionne d'abord un code de validation non conflictuel.

7. Procédé selon l'une quelconque des revendications 1 à 4, dans lequel le procédé comprend en outre :
l'invitation de l'utilisateur à omettre un code de validation conflictuel ou à déplacer le code de validation conflictuel à la fin d'une séquence de codes de validation lorsque l'utilisateur sélectionne le code de validation conflictuel.

8. Procédé selon l'une quelconque des revendications 1 à 7, dans lequel le procédé comprend en outre :
la réception d'une politique de sélection configurée par l'utilisateur, dans lequel la politique de sélection comprend l'une quelconque parmi une politique de sélection rapide, une politique de priorité non conflictuelle, et une politique de priorité utilisateur.

9. Procédé selon l'une quelconque des revendications 1 à 8, dans lequel la branche cible comprend une branche maîtresse ou une branche de développement.

10. Système de traitement de code, dans lequel le système comprend :
une unité de détermination (144), configurée pour déterminer une branche source et une branche cible d'un projet de développement logiciel, dans lequel la branche source comprend une pluralité de codes de validation, et la pluralité de codes de validation comprend un premier code de validation et un second code de validation ;
dans lequel l'unité de détermination est configurée pour :
analyser une variable utilisée et/ou une fonction appelée dans un fichier de code modifié correspondant au premier code de validation ; et
rechercher un fichier d'enregistrement sur la base de la variable utilisée et/ou de la fonction appelée dans le fichier de code modifié correspondant au premier code de validation, pour obtenir le second code de validation associé au premier code de validation, dans lequel le fichier d'enregistrement enregistre une variable et/ou une fonction définies dans un code de validation validé avant le premier code de validation et une relation d'association entre des codes de validation validés avant le premier code de validation ;
une unité d'affichage (124), configurée pour présenter le premier code de validation et le second code de validation associé au premier code de validation à un utilisateur ; et une unité de fusion (146), configurée pour réaliser une fusion de codes sur le premier code de validation, une partie ou la totalité des seconds codes de validation, et un code de validation dans la branche cible.

11. Système selon la revendication 10, dans lequel l'unité de détermination est particulièrement configurée pour :
déterminer le premier code de validation sélectionné par l'utilisateur ; et
déterminer le second code de validation associé au premier code de validation.

12. Système selon la revendication 10 ou 11, dans lequel l'unité d'affichage est en outre configurée pour :
présenter, à l'utilisateur, un code de validation sélectionné par l'utilisateur à partir du second code de validation ; et
l'unité de fusion est particulièrement configurée pour :
réaliser une fusion de codes sur le premier code de validation, le code de validation sélectionné à partir du second code de validation, et le code de validation dans la branche cible.

13. Système selon l'une quelconque des revendications 10 à 12, dans lequel l'unité d'affichage est en outre configurée pour :
présenter une relation d'association entre le premier code de validation et le second code de validation à l'utilisateur, dans lequel la relation d'association comprend au moins l'une parmi une relation entre une définition et une utilisation d'une variable et une relation entre une définition et un appel d'une fonction.
